Europäisches Patentamt

European Patent Office

Office européen des brevets

(11) Veröffentlichungsnummer: **0 478 925 A1**

# EUROPÄISCHE PATENTANMELDUNG

(21) Anmeldenummer: **91113176.1**

(22) Anmeldetag: **06.08.91**

(51) Int. Cl.5: **D03D 15/02**, B65G 15/54

(30) Priorität: **04.10.90 DE 4031212**

(43) Veröffentlichungstag der Anmeldung:
**08.04.92 Patentblatt 92/15**

(84) Benannte Vertragsstaaten:
**AT BE CH DE DK ES FR GB IT LI LU NL SE**

(71) Anmelder: **GKD GEBR. KUFFERATH GMBH & CO. KG**
**Metallweberstrasse 46**
**W-5160 Düren(DE)**

(72) Erfinder: **Graff, Wilhelm**
**Schwalbenweg 1**
**W-5160 Düren(DE)**

(74) Vertreter: **Hennicke, Albrecht, Dipl.-Ing. et al**
**Patentanwälte Dipl.-Ing. Buschhoff Dipl.-Ing.**
**Hennicke Dipl.-Ing. Vollbach**
**Kaiser-Wilhelm-Ring 24 Postfach 190 408**
**W-5000 Köln 1(DE)**

(54) **Drahtgewebeband.**

(57) Drahtgewebeband für eine Einrichtung, bei welcher das Band (10) in Richtung der Kettdrähte (9) über drehbare Walzen (11) läuft und bei dem die Schußdrähte (14) über die Unterseite des Bandes vorgekröpfte Unternocken (15) zur Seitenführung des Bandes und über die Oberseite (17) des Bandes (10) vorgekröpfte Obernocken (18) aufweist, welche der punktförmigen Auflagerung eines Transportgutes (12) dienen oder als Mitnehmer hinter das Transportgut greifen, wenn dieses von einem schräg aufwärts oder schräg abwärts laufenden Band gefördert wird.

FIG.2

Rank Xerox (UK) Business Services

Die Erfindung betrifft ein Drahtgewebeband für eine Einrichtung, bei welcher das Band in Richtung der Kettdrähte über drehbare Walzen läuft, mit quer zur Laufrichtung des Bandes sich erstreckenden Drähten, die über die Unterseite des Gewebes vorgekröpfte Unternocken aufweisen, welche in Führungsnuten am Umfang der Walzen eingreifen.

Drahtgewebebänder dieser Art werden zum Transport von vielen Gütern benutzt, beispielsweise von Stückgütern, Platten, Folien, Geweben, die hierbei auch durch eine Behandlungsflüssigkeit geführt, getrocknet oder auf andere Weise bearbeitet werden können. Während das Drahtgewebeband in seiner Längsrichtung aus flexiblen Drähten und in seiner Querrichtung aus starren Schußdrähten besteht, die eine glatte Bandoberfläche erzeugen, bilden die über die Unterseite des Gewebes vorgekröpften Unternocken Nockenreihen, mit denen sich das Band in Führungsnuten der Antriebs- und Umlenkwalzen seitlich führt. Drahtgewebebänder dieser Art sind durch die DE-PS 1 271 624 und die DE-PS 29 00 871 C2 bekannt.

Obgleich die bekannten Drahtgewebebänder mit verhältnismäßig großer Maschenbreite hergestellt werden können, bieten sie den zu transportierenden Gütern doch immer noch eine verhältnismäßig große Auflagefläche, wobei sich die querverlaufenden Schußdrähte und bei bestimmten Ausführungsformen auch die Kettdrähte oder die Kreuzungspunkte zwischen Schußdrähten und Kettdrähten im Transportgut abformen. Dies ist oft unerwünscht und es wird oft die Aufgabe gestellt, das Transportgut möglichst frei von der Oberfläche des Drahtgewebebandes zu halten oder höchstens punktweise auf dem Drahtgewebetransportband abzustützen. Ziel der Erfindung ist es deshalb, ein Drahtgewebeband der eingangs näher erläuterten Art so auszubilden, daß es das auf ihm zu transportierende Transportgut nur punktweise unterstützt und verhindert wird, daß sich die Gewebestruktur des Transportbandes auf dem zu transportierenden Transportgut abformt.

Diese Aufgabe wird mit der Erfindung dadurch gelöst, daß mindestens einzelne der quer zur Laufrichtung des Bandes sich erstreckenden Drähte über die Oberseite des Gewebes vorgekröpfte Obernocken aufweisen, die jeweils in der Mitte zwischen zwei im seitlichen Abstand voneinander befindlichen Kettdrähten angeordnet sind.

Diese Ausgestaltung hat den Vorteil, daß es auf dem Drahtgewebeband im Abstand voneinander angeordnete, punktförmige Erhöhungen gibt, welche das Transportgut punktweise unterstützen, so daß das Transportgut, beispielsweise ein Blech, eine Folienbahn od.dgl. nicht mit der Gewebeoberfläche des Transportbandes in Berührung kommt.

Eine solche punktweise Abstützung ist beispielsweise dann besonders vorteilhaft, wenn ein auf dem Drahtgewebeband transportiertes Blech oder ein anderer Körper vorher lackiert oder beschichtet wurde und der Lack oder die Beschichtung während des Transportes auf dem Drahtgewebeband durch Luft verfestigt werden soll, die von unten her durch das Drahtgewebeband gegen das Transportgut geblasen wird.

Die vorgekröpften Obernocken sind auch dann von Vorteil, wenn ein zwischen zwei erfindungsgemäßen Drahtgewebebändern eingespanntes flächiges Transportgut, beispielsweise eine Folien- oder Gewebebahn, durch eine Behandlungsflüssigkeit oder ein Pulverbad so geführt werden soll, daß eine möglichst große Oberfläche der durch das Bad geführten Bahn mit dem Pulver oder der Behandlungsflüssigkeit in Berührung kommt.

Die über die Oberfläche des Bandes vorstehenden Obernocken können auch als Mitnehmer für auf dem Band transportierte Stückgüter dienen, wenn das Band schräg aufwärts oder abwärts läuft und verhindert werden soll, daß das auf dem Band transportierte Transportgut auf der Bandoberfläche rutscht.

Um die Gewebebindung an allen Kreuzungspunkten zwischen Kettdrähten und Schußdrähten aufrechtzuerhalten, ist es wichtig, daß die Obernocken jeweils in der Mitte zwischen zwei im seitlichen Abstand voneinander befindlichen Kettdrähten angeordnet sind und die Drähte mit den Obernocken sich nicht quer zur Laufrichtung des Bandes verschieben können. Eine solche seitliche Verschiebung verhindern die Unternocken, die hierdurch nicht nur der Führung des Drahtgewebebandes in Querrichtung, sondern auch der Stabilisierung der Obernocken dienen.

Die Obernocken können in einem seitlichen Abstand voneinander angeordnet sein, der einem Mehrfachen der Ketteilung entspricht. Sie sind hierbei zweckmäßig in mehreren, quer zur Laufrichtung sich erstreckenden Drähten in Laufrichtung des Bandes in einer Reihe hintereinander angeordnet. Dies hat den Vorteil, daß die Obernocken im Untertrum zugleich die Seitenführung des Bandes übernehmen können, wenn eine solche erforderlich ist und sie in Umfangsrillen von Tragwalzen laufen, welche das Untertrum unterstützen.

Bei einer Ausführung des Traggewebebandes nach der Erfindung können die Obernocken in Führungsdrähten angeordnet sein, die zwischen den Schußdrähten quer zur Laufrichtung des Bandes miteingewebt sind und wenigstens auf einer Seite parallel zur Bandebene eine Abflachung aufweisen. Eine solche Ausführung ist bei leichten Drahtgewebebändern mit einfacher Leinenbindung vorteilhaft, bei denen die Seitenführung separate Führungsdrähte übernehmen, in denen die Unternocken angeordnet sind. Bei diesen Bändern können sowohl die Obernocken als auch die Unternocken in den

Führungsdrähten angeordnet sein, wobei die Abflachung der Führungsdrähte verhindert, daß sich die Führungsdrähte um ihre Längsachse drehen und die vorgekröpften Nocken sich annähernd parallel zu den Oberflächen des Drahtgewebebandes legen. Bei einer anderen Ausführungsform des Drahgewebebandes nach der Erfindung sind die Obernocken in den Schußdrähten des Gewebes angeordnet, welche auch die über die Unterseite des Gewebes vorgekröpften Unternocken aufweisen. Bei dieser Art des Drahtgewebebandes verhindern die gleichzeitig der Gewebebindung dienenden Unternocken eine Drehung der Schußdrähte und halten die Obernocken aufrecht, auch wenn die Schußdrähte, aus denen die Obernocken vorgekröpft sind, einen kreisrunden Querschnitt haben.

In beiden Ausführungsformen ist es zweckmäßig, wenn in Laufrichtung des Bandes in einer Reihe hintereinander angeordnete Obernocken einen Abstand voneinander haben, der einem ganzzahligen Vielfachen des Schußdrahtabstandes entspricht. Alle mit Obernocken versehenen Drähte haben dann eine analoge Gewebebindung und es ist gewährleistet, daß die Obernocken jeder Reihe in Längsrichtung genau miteinander fluchten.

Weitere Merkmale und Vorteile der Erfindung ergeben sich aus der nachfolgenden Beschreibung und der Zeichnung, in der eine bevorzugte Ausführungsform der Erfindung an einem Ausführungsbeispiel näher erläutert ist. Es zeigt:

Fig. 1    ein Drahtgewebeband nach der Erfindung in einer Draufsicht,

Fig. 2    den Gegenstand der Fig. 1 in einem Querschnitt nach Linie II-II quer zur Laufrichtung des Bandes mit einem nur angedeuteten, auf dem Band transportierten Körper und

Fig. 3    das Traggewebeband nach Fig. 1 in einem Teillängsschnitt nach Linie III-III.

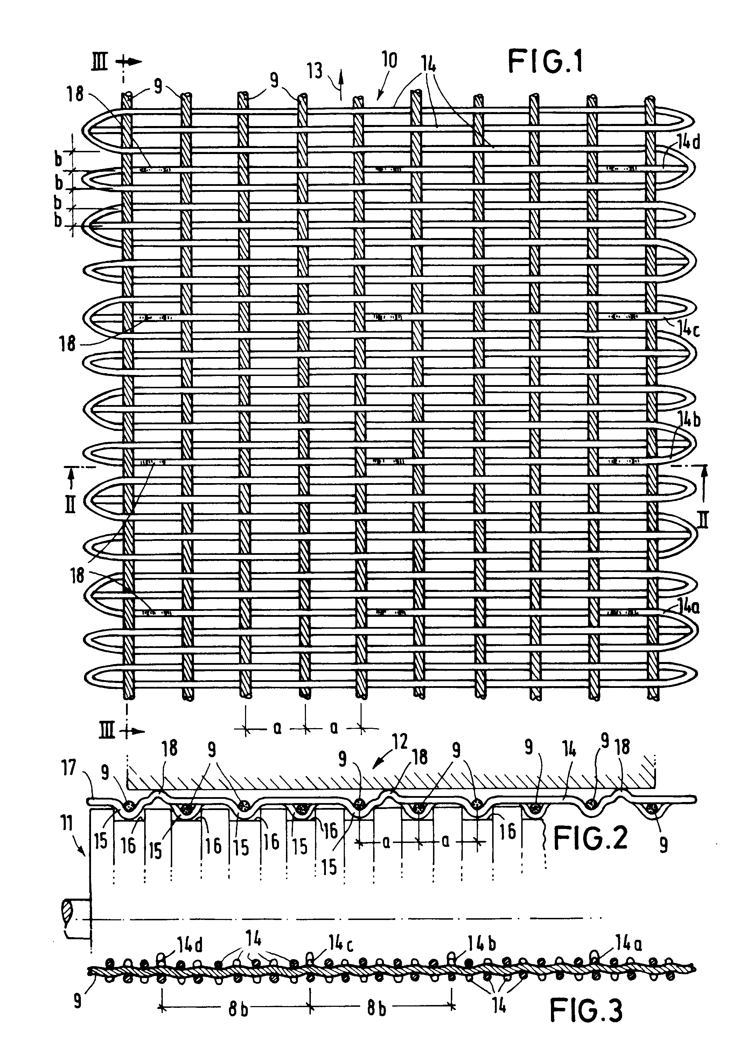

In der Zeichnung ist mit 10 ein Traggewebeband für eine Fördereinrichtung bezeichnet, von der in Fig. 2 nur eine Umlenkwalze 11 teilweise dargestellt ist, um die das Drahtgewebeband 10 läuft. Das Drahtgewebeband 10 dient zum Transportieren von Stückgütern, beispielsweise lackierten Auto- oder Maschinenteilen, von denen in Fig. 2 eines nur mit seiner Unterkante angedeutet und mit 12 bezeichnet ist.

Das in der Zeichnung dargestellte Drahtgewebeband 10 besteht aus in Längsrichtung oder Laufrichtung 13 des Bandes sich erstreckenden, flexiblen Kettdrähten 9, die aus dünnen, miteinander verdrillten Metalldrähten bestehen und aus verhältnismäßig steifen, sich quer zur Laufrichtung 13 erstreckenden, monofilen Schußdrähten 14, die mit den Kettdrähten 14 in Leinenbindung verwebt sind. Jeder Schußdraht ist dort, wo er einen Kettdraht unterfährt, mit einer über die Unterseite des Drahtgewebes 10 vorgekröpfte Unternocke 15 versehen, aber dort wo er einen Kettdraht 14 überkreuzt, glatt und geradlinig. Hierdurch entstehen auf der Unterseite des Drahtgewebebandes in Laufrichtung 13 Nockenreihen, mit denen sich das Drahtgewebeband in nutenförmigen Rillen 16 führt, die auf dem Umfang der Umkehrwalze 11 in seitlichem Abstand voneinander angeordnet sind. Ähnliche Rillen haben auch die anderen Antriebs- und Umlenkwalzen der Transporteinrichtung.

Einzelne der Schußdrähte 14, nämlich die Schußdrähte 14a, 14b, 14c und 14d haben außerdem über die Oberseite 17 des Gewebes 10 vorgekröpfte Obernocken 18, die jeweils in der Mitte zwischen zwei im seitlichen Abstand voneinander befindlichen Kettdrähten 14 angeordnet sind. Hierbei haben jeweils zwei Obernocken 18 in einem der Schußdrähte 14a, 14b, 14c und 14d einen seitlichen Abstand voneinander, der einem mehrfachen der Ketteilung a entspricht. Bei dem dargestellten Ausführungsbeispiel haben die Obernocken 18 einen seitlichen Abstand von jeweils 4a.

Man erkennt aus Fig. 1, daß die Obernocken 18 in den Schußdrähten 14a bis 14d in Laufrichtung 13 des Bandes in mehreren Reihen hintereinander angeordnet sind, so daß sie in Laufrichtung miteinander fluchten. Sie haben hierbei in Laufrichtung 13 des Bandes 10 einen Abstand voneinander, der einem ganzzahligen Vielfachen des Schußdrahtabstandes b entspricht, der bei dem dargestellten Ausführungsbeispiel dem achtfachen dieses Abstandes b entspricht (Fig. 3).

Man erkennt aus Fig. 2, daß das Transportgut 12 auf den Obernocken 18 nur punktweise abgestützt wird, während der größte Teil seiner dem Drahtgewebeband 10 zugewandten Unterfläche frei bleibt. Die Unterfläche des Transportgutes 12 kann deshalb leicht durch Luft gekühlt werden, welche von der Unterseite des Drahtgewebebandes 10 her durch dessen Maschen gegen die Unterseite des Transportgutes 12 geblasen wird.

Bei einer anderen, hier nicht näher dargestellten Ausführungsform können die Obernocken 18 und auch die Unternocken 15 in besonderen Führungsdrähten angeordnet sein, die zwischen zwei Schußdrähten im Abstand eines Mehrfachen der Schußdrahtteilung b mit in das Drahtgewebeband eingewebt sind und mindestens auf einer Seite mit einer Abflachung versehen sind. Die Schußdrähte brauchen dann nicht mit Unternocken oder Obernocken versehen zu sein, da die Führungsdrähte sowohl die Seitenführung des Drahtgewebebandes übernehmen, als auch das Transportgut nur punktweise auf der Oberseite des Drahtgewebebandes abstützen. Das Drahtgewebeband selbst kann dann ein gewöhnliches Drahtgewebeband mit Leinenbindung sein. Eine solche Ausführung eignet sich besonders für leichte, dünne Bänder, wie sie für den Transport von Folien- oder Gewebebahnen verwendet werden und in der DE-PS 29 00 871 C2 beschrieben sind. Die Erfindung ist nicht auf das dargestellte und beschriebene Ausführungsbeispiel beschränkt, sondern es sind auch noch andere Ausführungsformen möglich, ohne den Rahmen der Erfindung zu verlassen.

Beispielsweise kann das Drahtgewebeband nach der Erfindung auch mit noch mehr oder weniger Obernocken versehen werden, und es ist auch möglich, eine andere Gewebebindung vorzusehen, wenn sich hierdurch Vorteile ergeben. Wichtig ist aber, daß die Gewebebindung auf beiden Seiten der Obernocken erhalten bleibt.

**Patentansprüche**

1. Drahtgewebeband für eine Einrichtung, bei welcher das Band in Richtung der Kettdrähte über drehbare Walzen läuft, mit quer zur Laufrichtung des Bandes sich erstreckenden Drähten, die über die Unterseite des Gewebes vorgekröpfte Unternocken aufweisen, welche in Führungsnuten am Umfang der Walzen eingreifen, **dadurch gekennzeichnet**, daß mindestens einzelne der quer zur Laufrichtung (13) des Bandes (10) sich erstreckenden Drähte (14a, 14b, 14c, 14d) über die Oberseite (17) des Gewebes vorgekröpfte Obernocken (18) aufweisen, die jeweils in der Mitte zwischen zwei im seitlichen Abstand voneinander befindlichen Kettdrähten (9) angeordnet sind.

2. Drahtgewebeband nach Anspruch 1, **dadurch gekennzeichnet,** daß die Obernocken (18) in einem seitlichen Abstand (4a) voneinander angeordnet sind, der einem Mehrfachen der Ketteilung (a) entspricht.

3. Drahtgewebeband nach Anspruch 1 oder 2, **dadurch gekennzeichnet**, daß Obernocken (18) in mehreren, quer zur Laufrichtung (13) sich erstreckenden Drähten (14) in Laufrichtung (13) des Bandes (10) in einer Reihe hintereinander angeordnet sind.

4. Drahtgewebeband nach einem der Ansprüche 1 bis 3, **dadurch gekennzeichnet**, daß die Obernocken in Führungsdrähten angeordnet sind, die zwischen den Schußdrähten quer zur Laufrichtung des Bandes mit eingewebt sind und wenigstens auf einer Seite parallel zur Bandebene eine Abflachung aufweisen.

5. Drahtgewebeband nach einem der Ansprüche 1 bis 4, **dadurch gekennzeichnet,** daß die Obernocken und die Unternocken in den Führungsdrähten angeordnet sind.

6. Drahtgewebeband nach einem der Ansprüche 1 bis 3, **dadurch gekennzeichnet,** daß die Obernocken (18) in Schußdrähten (14a, 14b, 14c, 14d) des Gewebes angeordnet sind, die auch über die Unterseite des Gewebes vorgekröpfte Unternocken (15) aufweisen.

7. Drahtgewebeband nach einem der Ansprüche 1 bis 6, **dadurch gekennzeichnet,** daß die in Laufrichtung (13) des Bandes in einer Reihe hintereinander angeordneten Obernocken (18) einen Abstand voneinander haben, der einem ganzzahligen Vielfachen des Schußdrahtabstandes (b) entspricht.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 540 525 (VALEO)<br>* Seite 1, Zeile 1 - Seite 2, Zeile 23; Abbildungen 1-3 * *<br>– – – | 1-3,6,7 | D 03 D 15/02<br>B 65 G 15/54 |
| A | DE-C-439 030 (GIESEN)<br>– – – | | |
| A,D | DE-B-1 271 624 (KUFFERATH)<br>– – – | | |
| A,D | DE-A-2 900 871 (KUFFERATH)<br>– – – – – | | |

**RECHERCHIERTE SACHGEBIETE (Int. Cl.5)**

D 03 D
B 65 G

Der vorliegende Recherchenbericht wurde für alle Patentansprüche erstellt

| Recherchenort | Abschlußdatum der Recherche | Prüfer |
|---|---|---|
| Den Haag | 08 Januar 92 | BOUTELEGIER C.H.H. |

**KATEGORIE DER GENANNTEN DOKUMENTE**

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
  nach dem Anmeldedatum veröffentlicht worden ist
D : in der Anmeldung angeführtes Dokument
L : aus anderen Gründen angeführtes Dokument
-------------------------------------------------------
& : Mitglied der gleichen Patentfamilie,
  übereinstimmendes Dokument